# EUROPEAN PATENT APPLICATION

(11) **EP 2 876 525 A2**
(43) Date of publication of application: **27.05.2015**
(21) Application number: 14001392.1
(22) Date of filing: 13.05.2014
(51) Int. Cl.: G06F 3/01, G02B 27/00

(54) **Electronic eyeglasses and method of manufacture thereto**

(30) Priority: 21.11.2013 JO 20130326
(71) Applicant: Ziad Ali Hassan Darawi, BeitLahm (PS)
(72) Inventor: Ziad Ali Hassan Darawi, BeitLahm (PS)
(74) Representative: Malamis, Alkisti-Irene

(57) **Abstract**

A system and methods for recognizing certain eye or eyelid gestures such as by opening or closing of eyelid or movement of the pupil as signals to trigger certain predesigned desired events. An embodiment comprises of electronic glasses placed in front of the eye to recognize certain eye or eyelid gestures as signals to control an electronic device such as a chair for the special needs, or TVs or Car system or some video games. This is achieved through an apparatus and method of Integrated Circuits (IC) for the purpose of detecting black or white color; for the purpose of controlling the speed of movement of a wheelchair; a wireless control system for the wheelchair. The electronic glasses embodiment is designed using optical probes (IR), some high capacity relays and some amplifiers to run transistors which work to run relays to separate the control circuit from the power circuits.

## Description

### TECHNICAL FIELD

Embodiments are generally related to devices capable of recognizing certain eye or eyelid movements or gestures as signals to trigger desired events as predesigned in the apparatus. Embodiments are additionally related to an apparatus and method of Integrated Circuits (IC) for the purpose of detecting black or white color. Embodiments are also related to devices which aid the disabled to operate machines like a wheelchair using their eye/eyelid gestures as signals. Embodiments are additionally related to an apparatus and method of Integrated Circuits (IC) for the purpose of controlling the speed of movement of a wheelchair. Embodiments are additionally related to an apparatus and method of Integrated Circuits (IC) for the purpose of controlling the wheelchair through a remote control.

### BACKGROUND OF THE INVENTION

There are various people with certain disabilities which renders it highly incovenient or in some cases, even impossible to operate certain machines, for instance, a wheel chair. These disabilities could be of the limbs thereby obstructing the operation of these machines by such people. Thus there is a need for an apparatus or device which can enable and facilitate the control of such machines by such people.

There is also a demand for more convenient and sophisticated control mechanisms for electronic devices in today's world such as more convenient ways to dial an emergency phone number, or more immersive controllers for video games.

The present invention illustrates a device which can be used as a control system recognizing eye or eyelid gestures as signals to trigger a response where such response could be a predefined function of a mechanical device or an electronic signal to an electronic device to perform a predefined operation.

### BRIEF SUMMARY

The following summary is provided to facilitate an understanding of some of the innovative features unique to the disclosed embodiment and is not intended to be a full description. A full appreciation of the various aspects of the embodiments disclosed herein can be gained by taking the entire specification, claims, drawings, and abstract as a whole.

It is, therefore, one aspect of the disclosed embodiments to provide an apparatus for a control system recognizing certain eye or eyelid gestures as signals to trigger predefined responses.

It is another aspect of the disclosed embodiments to provide disabled people a better way of controlling the direction of movement of their wheelchair or dial an emergency phone number using their eye or eyelid gestures as signals.

An embodiment of this invention comprises of electronic glasses placed in front of the eye to recognize certain eye or eyelid gestures as signals to control an electronic device such as a chair for the special needs, or TVs or Car system or some video games.

It is another aspect of the disclosed embodiments in respect of a wheelchair control system to provide a mechanism for stopping the movement of the wheelchair on detection of an approaching body to prevent a collision.

It is another aspect of the disclosed embodiments to provide a simulation mechanism for the wheelchair embodiment of the invention.

It is yet another aspect of the disclosed embodiments to provide for a wireless control system for certain people such as children or disabled people who find it difficult to use electronic glasses.

The aforementioned aspects and other objectives and advantages can now be achieved as described herein.

### BRIEF DESCRIPTION OF THE DRAWINGS

The accompanying figures, in which like reference numerals refer to identical or functionally-similar elements throughout the separate views and which are incorporated in and form a part of the specification, further illustrate the disclosed embodiments and, together with the detailed description of the invention, serve to explain the principles of the disclosed embodiments.
FIG. 1 illustrates a circuit which is based on an optical probe, which can distinguish between a white color and a non-white color, to detect the position of the pupil of the eye as the pupil appears non white in contrast with the surrounding white sclera. Using this information we detect the movement of the pupil and transfer it in the form of (0,1) to the electronic circuits.
FIG. 2 illustrates a mechanical circuit used in conjunction with the circuit in FIG. 1, where the information transferred to the mechanical circuit is converted to a value to a movement either to the right, the left, the forward or the backward. Thus, this embodiment detects the movement of the pupil to signal the appropriate predefined response, for instance to move a wheelchair in a particular direction.
FIG. 3 illustrates the final circuit of the wheelchair embodiment using the black and white probe system as described in FIG 1 and 2.
FIG. 4 illustrates an outer schematic diagram of the control circuit for Glasses and Engines.
FIG. 5 illustrates an internal connect way for the control circuit depicted in FIG. 4, in accordance with the disclosed embodiments;
FIG. 6 illustrates an outer schematic diagram of the speed control circuit.
FIG. 7 illustrates an internal connect way for the speed control circuit depicted in FIG. 6, in accordance with the disclosed embodiments;
FIG. 8 illustrates a control circuit in pulse width through the rheostat:
FIG. 9 illustrates an internal connect way for the control circuit in pulse width through rheostat depicted in Fig. 8;
FIG. 10 illustrates a schematic diagram of Transmitter used in the Remote Control Circuit.
FIG. 11 illustrates the Decoder used with the Remote Control Circuit.
FIG. 12 illustrates another schematic diagram of the Remote Control Circuit.
FIG. 13 illustrates the Receiver along with the Code Analyzer used with the Remote Control Circuit
FIG. 14 illustrates a mobile control panel:
FIG. 15 illustrates an internal connect way for the mobile control panel depicted in Fig. 14.
FIG. 16 illustrates an LED display panel which is used for simulation purposes.
FIG. 17 illustrates a boxing scheme for the embodiments.

### DETAILED DESCRIPTION

The particular values and configurations discussed in these non-limiting examples can be varied and are cited merely to illustrate at least one embodiment and are not intended to limit the scope thereof.

The present invention illustrates a device which can be used as a control system recognizing eye or eyelid gestures as signals to trigger a response where such response could be a predefined function of a mechanical device or an electronic signal to an electronic device to perform a predefined operation.

An embodiment of this invention comprises of electronic glasses placed in front of the eye to recognize certain eye or eyelid gestures as signals to control an electronic device such as a chair for the special needs, or TVs or Car system or some video games.

The electronic glasses embodiment is designed using black and white optical probes, some relays and some amplifiers to run transistor which works to run relays to separate the control circuit from the power circuits without using a programming system. These glasses developed using optical probes (IR) (Transceiver) and high-capacity relays can be made in various designs as is suitable for all people of all ages and sizes thus to better fit with all the faces and eyes. Several lenses have been developed by us which take into account the lighting conditions such as night or day, and inside or outside the house.

Control probes placed on the glasses embodiment help in calibration of the eye in a smooth and safe way. Further, a programming system can be installed on the on the glasses embodiment to recognize certain eye or eyelid gesture as signals and use these signals to control any electronic apparatus such as a wheelchair for the disabled. In cases where the control was positioned by the hand of the people with disabilities midterm lower (lower limbs), the chair could be controlled by the electric hand known in the practical market.

The electronic glasses embodiment of this invention to be used by people with disability and ordinary people controls the chair by the recognizing the eye or eyelid gestures as signals indicating information such as the direction of travel of the chair; or making an emergency phone call; or switching the machine on or off.

Another embodiment of this invention provides for a wireless control system for certain people such as children or disabled people who find it difficult to use electronic glasses or even electric hand.

Another aspect of the disclosed embodiments in respect of a wheelchair control system is to provide a mechanism for stopping the movement of the wheelchair on detection of an approaching body to prevent a collision. This can be achieved by putting probes as a protection for chairs on three parts; namely in the front of the chair, its left and its right to stop movement of the chair in the event of detection of an approaching body to prevent collision.

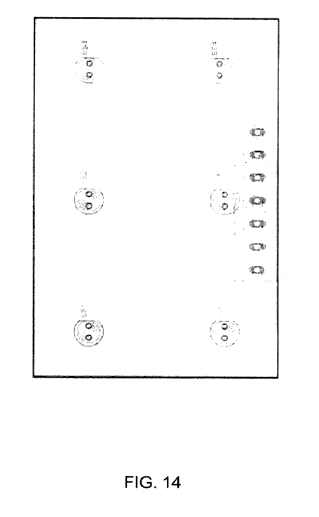

It is another aspect of the disclosed embodiments to provide a simulation mechanism, as illustrated in FIG. 14, 15 and 16, for the wheelchair embodiment of the invention by having electronic display panel with small lamps indicating the detected signal. Such a panel can be made to be moveable easily in any direction.

The display panel of the directions consists of five small lamps have current 0.02 A, and for each lamp a special function. This panel facilitates simulation between the chair and the user through giving him several options to choose such as make=ing a phone call or to fully stop the chair. A small lamp gives an alert sign for the existence of an obstacle in front of the chair. Keeping this lamp in running condition, the chair does not move forward, but moves and gives orders for moving in either the left or the right direction and in making phone calls until this lamp switches off.

This Panel can be moved according to the convenience of the user.

FIG. 14 illustrates a mobile control panel:

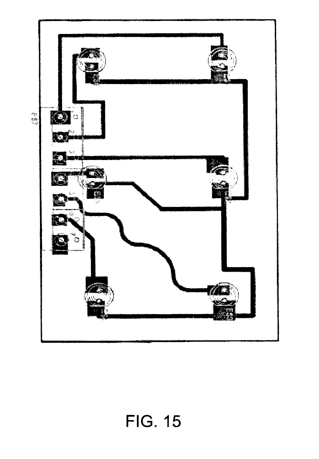

FIG. 15 illustrates an internal connect way for the mobile control panel as depicted in FIG. 14.

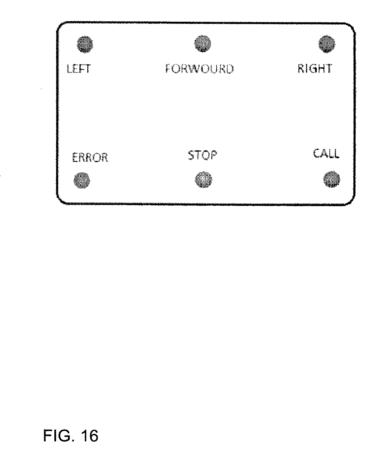

FIG. 16 illustrates an LED display panel which is used for simulation purposes.

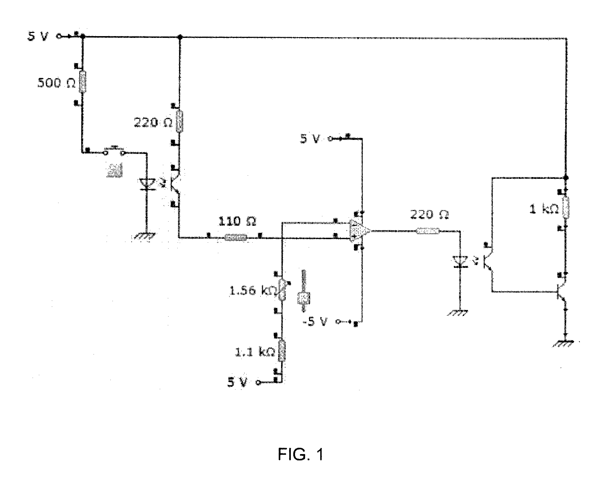

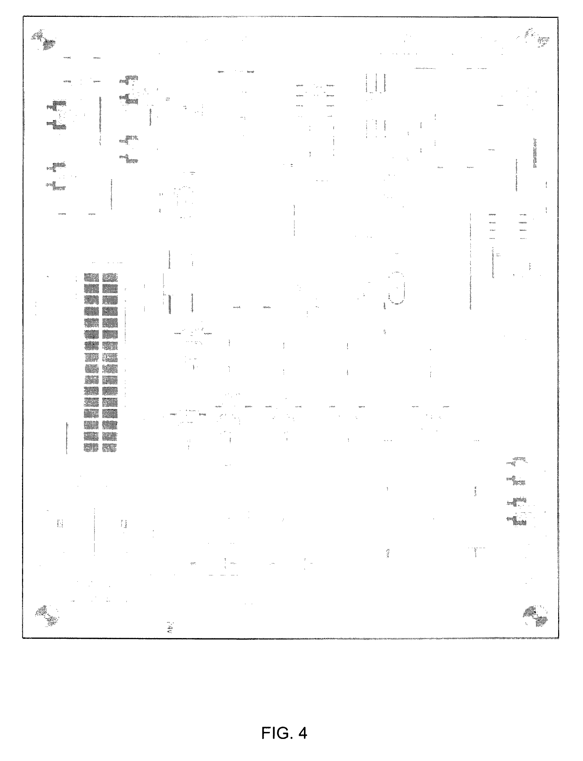

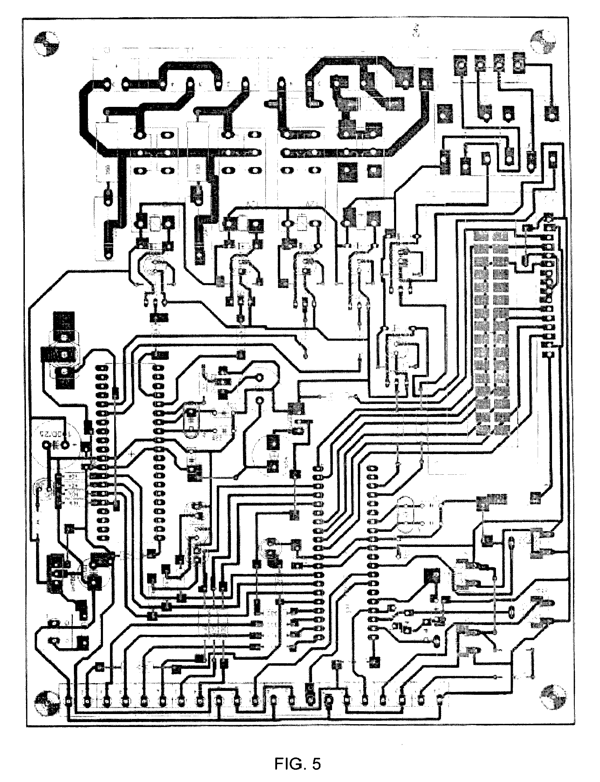

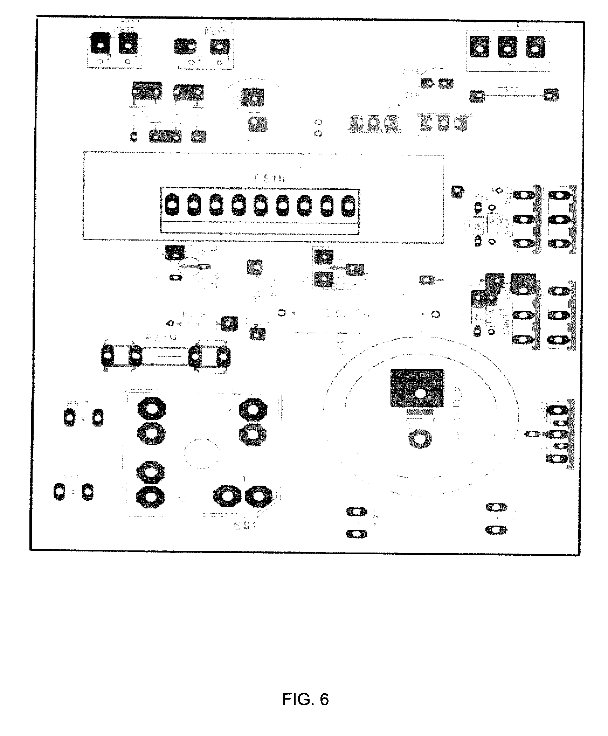

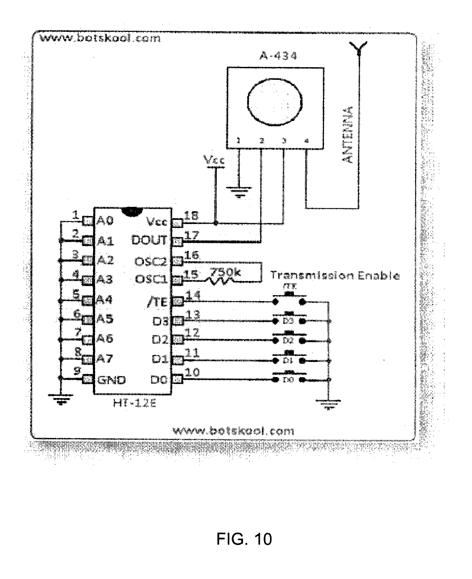

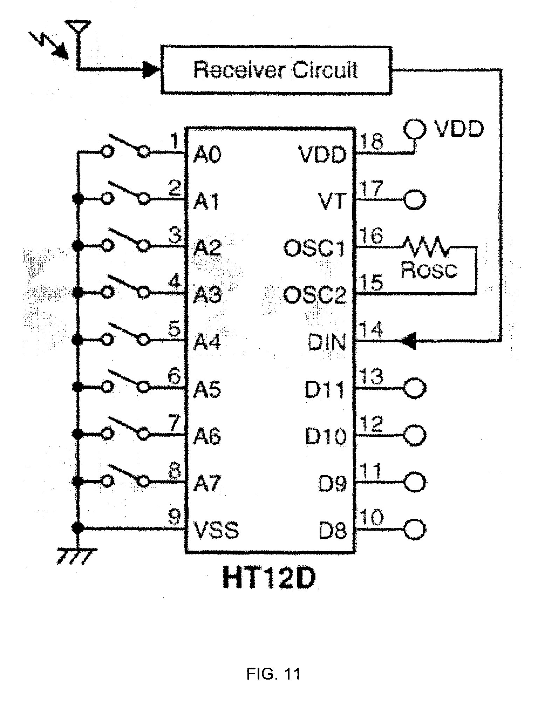

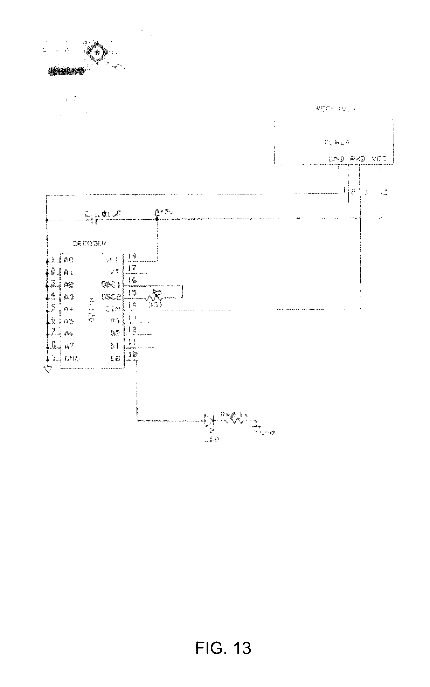

The electronic glasses embodiment is a fully integrated system consisting of number of the circuits and programming languages described as follows -
a) A control circuit, as illustrated in Fig. 1, 2 and 3, through at least one black and white probe which works to distinguish between the white and any other color.
   FIG. 1 illustrates a circuit which is based on an optical probe, which can distinguish between a white color and a non-white color, to detect the position of the pupil of the eye as the pupil appears non white in contrast with the surrounding white sclera. Using this information we detect the movement of the pupil and transfer it in the form of (0,1) to the electronic circuits.

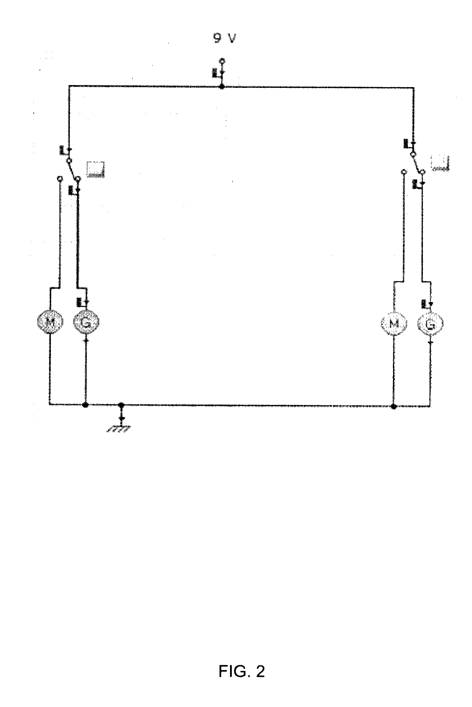

   FIG. 2 illustrates a mechanical circuit used in conjunction with the circuit in FIG. 1, where the information transferred to the mechanical circuit is converted to a value to a movement either to the right, the left, the forward or the backward. Thus, this embodiment detects the movement of the pupil to signal the appropriate predefined response, for instance to move a wheelchair in a particular direction.

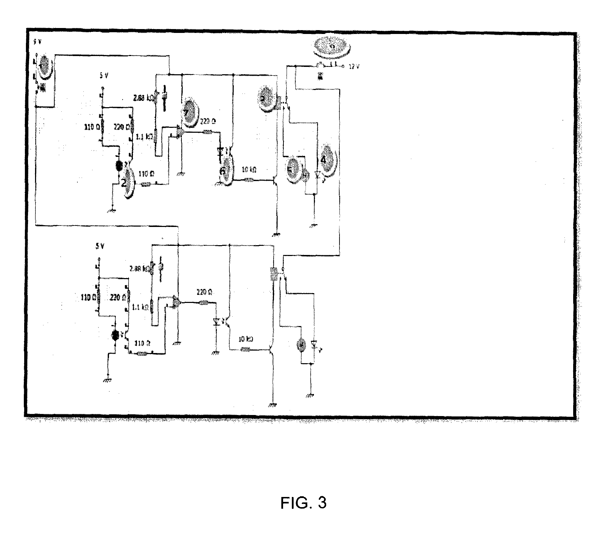

   FIG. 3 illustrates the final circuit of the wheelchair embodiment using the black and white probe system as described in FIG 1 and 2
   This embodiment has various ways to allow the user to switch on or off the machine. For instance, there can be a switch key behind the chair's back; or a switch key under the chair; or a necessary condition of glasses to be worn by the user. The operation of the chair can be made such that on missing any of the previous conditions, the chair stands still. This significantly increases the safety for user of the chair.
b) The circuit which controls the glasses and engines of the chair as illustrated in FIG. 4 and 5.
   FIG. 4 illustrates an outer schematic diagram of the control circuit for Glasses and Engines.
   FIG. 5 illustrates an internal connect way for the control circuit depicted in FIG. 4, in accordance with the disclosed embodiments;
   It consists of two microcontrollers (2PIC). The first controller controls the relays that controls the engines of the chair using the signal detected from the eye or eyelid gesture by optical probes (IR) used on the glasses. The first controller also sends the signal to the internal control on display panel for simulation purpose, as illustrated in FIG 16, through which, based on the simulation results, we can control the standards of probes on the glasses by varying the resistance of variable resistors (rheostats).
   The circuit contains a voltage regulator which maintains the proper voltage across the outside battery connected to the circuit.
   The embodiment also contains a headset to alert when giving an order for glasses by the eye. It also contains a key in order to switch on or off the circuit. The circuit is also switched off when the glasses are removed from the eye, and switched on when the glasses are re-worn.
   The second controller sends signals to transistors, which work as keys the relays which control the operation of engines. There is also a protection by the microcontroller of the currents that are required to run the relay. It also contains a diode that works to protect the relays file from reverse currents when connected in parallel with the private relay's file.
   There is also a switch key for switching on or off the relays which can be closed as needed, for instance when calibrating the glasses on the eye to customize with a particular use the relays could be swtiched off so as to avoid random movements and after calibration the relays could be switched on.
   This also contains a number of small bulbs of 0.02 A which facilitate the calibration process and clarify how the circuit works by running a small lamp required during calibration.
   This circuit contains five relays, three of which control the engines while one is to do a dial after taking the sign from the controller, which will be issued by the eye. The first three relays take the signal from the eye through microcontroller by transistors in order to separate the control circuits from power circuits and the relays contain Platinum, so as to be high-capacity and bear high currents to be able to run and move the engines
   The fifth relay works for protection and is connected to the microcontroller which takes its order from protection Probes located on the edge of the chair.
   The relays work in three directions, forward via the relay in the middle, right via the relay in the supreme right direction and left via the relay in the bottom left as depicted in FIG 4.
   This circuit also contains entries for the circuit as a whole to move the eye sign of IR probes via Wire to Microcontroller. It also contains sign input outlets through the entrances to the plate to give the movement orders.
c) A Speed control circuit, as illustrated in FIG. 6, 7, 8 and 9, to move the chair in a way without any random movements or jerks.
   This consists of MOSFET with high capacities to control the speed of the engine by controlling the voltage by connected Panel to control the pulse width. It also contains a fuse for protection against high currents and contains a large extender to smoothen voltage and has a battery of entrance and outlet for engines. It also contains resistors for protection and increased security and a supplementary circuit containing IC to control pulse width. It also contains an electronic panel consisting of IC and rheostat to control speed.
   FIG. 6 illustrates an outer schematic diagram of the speed control circuit.

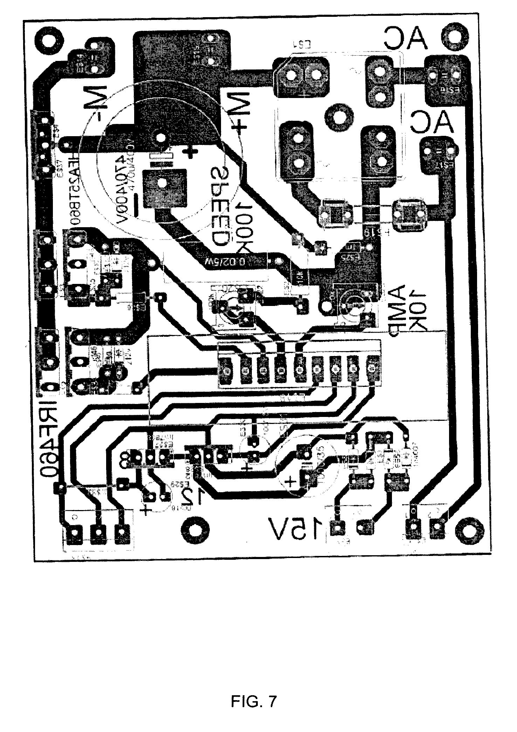

   FIG. 7 illustrates an internal connect way for the speed control circuit depicted in FIG. 6, in accordance with the disclosed embodiments;

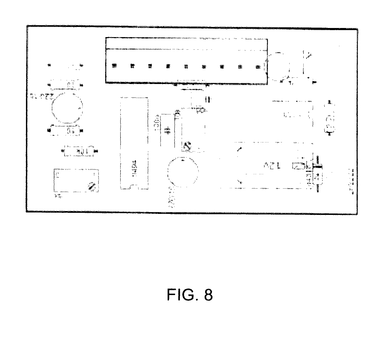

   FIG. 8 illustrates a control circuit in pulse width through the rheostat:

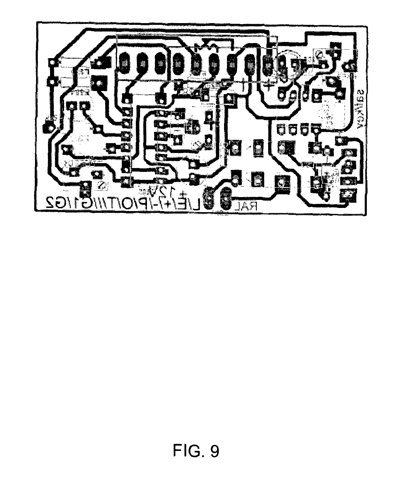

   FIG. 9 illustrates an internal connect way for the control circuit in pulse width through rheostat depicted in Fig. 8;
d) A Remote control circuit, as illustrated in FIG. 10, 11, 12 and 13, for controlling the chair from a distance wirelessly.
   FIG. 10 illustrates a schematic diagram of the Transmitter used in the Remote Control Circuit.

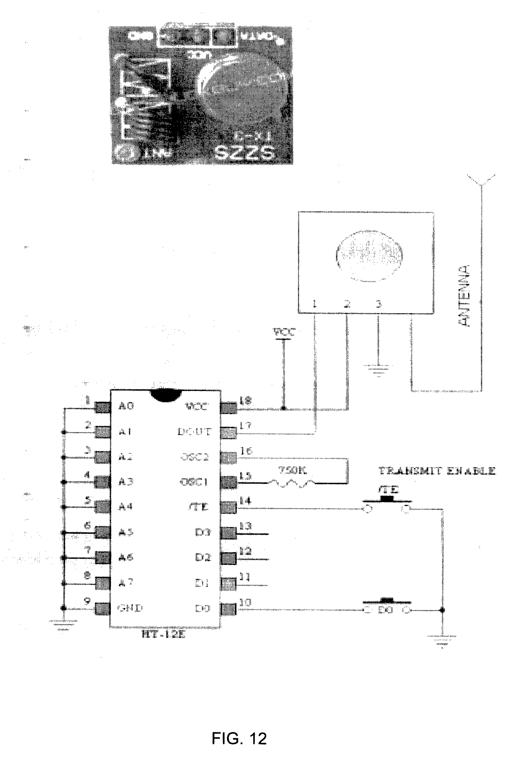

   FIG. 12 illustrates another schematic diagram of the Remote Control Circuit.
   As illustrated in FIG. 10, It contains a transmitter which takes the sign through encoder (ht-12e) IC (Encryption) and sends signal to the code analyst through 0-1 after encrypting it and sending this signal through Compressor keys.
   The (ht-12e) IC consists of 18 legs:
   From 1 to 9 leg to encrypt to the ground,
   From 10 - 14 for giving orders,
   From 15-16 for Resistance of 750 Kilo ohm
      17 for data output
      18 for Entrance Voltage vcc +5
   The Receiver has 4 Legs:
   1 ground
   2 data taker
   3 vcc5+3
   4 transmission wire
   FIG. 13 illustrates the Receiver along with the Code Analyzer used with the Remote Control Circuit.
   The receiver where it takes a sign from the transmitter consists of four Entrances:
   1 Connects with Ground 0v
   2 the wire receiving data
   3 outputs the data to decoder
   4 feed entrance vcc 5+
   FIG. 11 illustrates the Code Analyst (Decoder) used with the Remote Control Circuit.
   The Code Analyst ht-12d (decoder) take the data and analyzes and converts it to orders. It consist of 18 Entrances :
   1 - 9 Entrances connect with ground a code which is made up with (encoder) In order to not disturb with external data.
   10 - 13 Outlets (orders), where it outs the data in the form of a 1-0,0-5+v connected with a Transistor doing a work as an electronic key and the transistor turns on small relays which turn on big relays which bear higher currents for the engines while the small Relays separate the power circuits and control circuits to increase the safety of the circuits.
   14 Data Entrance, which enters the date to code analyst.
   15 - 16 connected with some by resistance 33 Kilo.
   17 Connected with led To find out and show the input sign.
   18 which is conducted with positive feed vcc5+.
e) In an embodiment the main program for the microcontrollers of the glasses system and engines has been written in the language Mikro basic.
   Some programs are explained as follows:

### i. Program for control using whether eye is open or closed:

Inside the electronic glasses, there is an optical probe IR transmitter and receiver.

The Transmitter sends rays in the direction of the eye while the Receiver receives these rays reflected from the eye. When the eye (eyelid) is open the return sign is weak and when it is closed the sign is strong. Thus, the value of received signal varies according to the state (open or closed) of the eye and is sent over the wire to the controller for processing.

The function of the micro controller is to receive the signal issued from the eye, when the sign is strong it is understood that the eye is closed and when it is weak it is understood that it is open. According to this difference we take orders.

There is a display panel related to the control consisting of two small lamps installed in front of the person sitting on the chair in order to choose the required movements which is simulated between the person and the chair.

As illustrated in FIG. 16, in the LED display panel which is used for simulation purposes, there are six LEDs with each led showing a specific function as shown in the said figure.

For instance, when the Right LED is lit and the eye is closed, the return sign is strong, and the program tells the controller to order to move to the right. Similarly, for each LED an order goes to another controller.

When any such order reaches from the first micro controller, the second micro controller runs relays responsible for delivering the voltage to the engines for the chair, as well as the rest of the movements subject to added protection probes which vary by what the person customizes it to as well as predefined safety measures to prevent any direct collision.

The following program written in Mikro Basic achieves this mechanism:

```
  [program ElectricChairPulsOnEnd
  dim fl as byte
   dim irvr,irvl,coup,cou,stopp,stoppref,adccou,ls,rs as word
   dim irvrlcd,irvLlcd,stopplcd,stoppreflcd,lslcd,rslcd as
  string[10]
    sub procedure interrupt
  adccou=adccou+1'?ICI C???C?CE
  if adccou>30 then
  adccou=0
  end if
  coup=coup+1
  if portb.3=1 then
  cou=cou+1
  end if
  if portb.3=0 then
  cou=0
  portb.4=0
  end if
   TMR0 = 96
   INTCON = $20 'Set T0IE, claer T0IF
  end sub
  main:
   OPTION_REG = $84 'Assign prescaler to TMR0
  TMR0 =96
   INTCON = $A0 'Enable TMR0 interrupt
  Lcd_Init(portd)
  Lcd_Cmd(LCD_CLEAR)
  Lcd_Cmd(LCD_CURSOR_OFF)
  OPTION_REG = $84 ' Assign prescaler to TMR0
    ADCON1 = $80 'Configure analog inputs and
  Vref
    TRISA = $FF ' PORTA is input
    TRISB =%00000000 'Pins RB7 and RB6 are
  output
    trisc=%00001111
    TRISD = $0
    portb=% 11111111
    Delay_ms(200)
    portb=%00000000
  fl=O
  coup=0
  cou=0
  Lcd_Init(portd)
  Lcd_Cmd(LCD_CLEAR)
  Lcd_Cmd(LCD_CURSOR_OFF)
  while TRUE
  if adccou>0 then
  irvl = Adc_Read(0)
  end if
  if adccou>5 then
  irvr=Adc_Read(1)
  end if
  if adccou>10 then
  stopp=ADC_read(2)
  end if
  if adccou>15 then
  stoppref=ADC_read(3)
  end if
   if adccou>20 then '
  rs=ADC_read(4)
  end if
  if adccou>25 then'
  Is=ADC_read(5)
  end if
  WordToStr(irvr,irvrlcd)
   Lcd_Out(1,6,irvrlcd)
  WordToStr(irvL,irvLlcd)
   Lcd_Out(1,12,irvLlcd)
   'WordToStr(stopp,stopplcd)
   'Lcd_Out(2,1,stopplcd)
   WordToStr(stoppref,stoppreflcd)'
   Lcd_Out(2,12,stoppreflcd)
  WordToStr(rs,rslcd)
  Lcd_Out(2,6,rslcd)
  'WordToStr(ls,lslcd)
  'Lcd_Out(1,1,lslcd)
  if irvr > irvL then
  portb.3=1
  end if
  if irvr < irvL then
  portb.3=0
  end if
    if coup>0 then portb.5=1 end if
    if coup>300 then portb.6=1 portb.5=0 end if
    if coup>600 then portb.7=1 portb.6=0 end if
    if coup>900 then portc.4=1 portb.7=0 end if
    if coup>1200 then portc.4=0 portc.5=1 end if
     if coup>1500 then portc.5=1 portc.6=1 end if
  if coup >1800then
  portc.6=0
  coup=0
  end if
     if cou>50 then
     portb.4=1
     end if
     if cou >80 then
     portb.4=0
     end if
  if (portb.1=0) and (portb.2=0) then
    if (cou>80) and (portb.5=1) and (portb.0=0)and (fl.0=0)
  then
    portb.0=1
    fl.0= 1
    fl.1=1
    end if
    if portb.3=0 then
    fl.0=0
    fl.1=0
    end if
   end if
    if (cou>80) and (portb.3=1) and (fl.1=0) then
    portb.0=0
   fl. 0= 1
   fl.1=1
    end if
   if (portb.0=0) and (portb.2=0) then
    if (cou>80) and (portb.6=1) and (portb.1=0)and (fl.2=0)
  then
    portb.1=1
    fl.2=1
    fl.3=1
    end if
    if portb.3=0 then
    fl.2=0
    fl.3=0
    end if
    end if
    if (cou>80) and (portb.3=1) and (fl.3=0) then
    portb.1=0
    fl.2=1
    fl.3=1
    end if
    if (portb.0=0) and (portb.1=0) and (stopp>stoppref) then
    if (cou>80) and (portb.7=1) and (portb.2=0)and (fl.4=0)
  then
    portb.2=1
    fl.4=1
    fl.5=1
    end if
    if portb.3=0 then
    fl.4=0
    fl.5=0
    end if
    end if
    if (cou>80) and (portb.3=1) and (fl.5=0) then
    portb.2=0
    fl.4=1
    fl.5=1
    end if
   if stopp < stoppref then
   portb.2=0
   end if
  wend
  end.
```

### ii. Program for control by the movement of the pupil of the eye:

This program uses the electronic glasses embodiment to control the chair by the movement of the pupil to the left, the right and the front and even the run and extinguish way of the chair by the movement of the pupil aided to the lid for the run and extinguish.

But the difference between this system in the program than the above mentioned program for control by whether eye is open or closed is that we use both eyes, not one eye to read eye movements, and use a difference system in reading of the eyes by putting two probes and not just one.

For lateral direction movement, when the right eye's signal is higher than the left sign eye the controller sends information to the controller of the engines (relays) to move the chair to the right, and similarly so for the movement toward the left.

For forward direction movement, the person just has to look forward wherein the pupil will be in the center of the eye.

For the run and extinguish for the chair, it is done by closing the eyelids together to extinguish the chair and then closing the eyelids again to turn the chair.

The following program written in Mikro Basic achieves this mechanism:

```
  [program ElectricChair
   dim irvr, irvr1,irvr2,irvr3,irvr4,irvr5,irvr6, irvr7,irvr8,irvr9,irvr10
  as word
   dim irvrSt,irvlSt,onoff,onoffst,fl,x,y,zz as byte
   dim irvL,
  irvL1,irvL2,irvL3,irvL4,irvL5,irvL6,irvL7,irvL8,irvL9,irvL10 as
  word
   dim irvrlcd,irvLlcd,irvrStlcd,irvlstlcd,onofflcd as string[10]
   main:
   Lcd_Init(portd)
   Lcd_Cmd(LCD_CLEAR)
   Lcd_Cmd(LCD_CURSOR_OFF)
  OPTION_REG = $84 'Assign prescaler to TMR0
   ADCON1 = $80 'Configure analog inputs and
  Vref
    TRISA = $FF ' PORTA is input
    TRISB =%00000000 ' Pins RB7 and RB6 are
  output
   trisc=% 11111111
   TRISD = $0
    portb=%00000000
   x=0
   y=0
   zz=0
   fl=0
   irvr=0
   irvr1=0
   irvr2=0
   irvr3=0
   irvr4=0
   irvr5=0
   irvr6=0
   irvr7=0
   irvr8=0
   irvr9=0
   irvr10=0
   irvrSt=0
  while TRUE
  irvr1 = Adc_Read(0)
  irvL1 =Adc_Read(1)
  Delay_ms(1)
  irvr2 = Adc_Read(0)
  irvL2 = Adc_Read(1)
  Delay_ms(1)
  irvr3 = Adc_Read(0)
  irvL3 = Adc_Read(1)
  Delay_ms(1)
  irvr4 = Adc_Read(0)
  irvL4 = Adc_Read(1)
  Delay_ms(1)
  irvr5 = Adc_Read(0)
  irvL5 = Adc_Read(1)
  Delay_ms(1)
  irvr6 = Adc_Read(0)
  irvL6 =Adc_Read(1)
  Delay_ms(1)
  irvr7= Adc_Read(0)
  irvL7 = Adc_Read(1)
  Delay_ms(1)
  irvr8= Adc_Read(0)
  irvL8 =Adc_Read(1)
   Delay_ms(1)
   irvr9 = Adc_Read(0)
   irvL9 = Adc_Read(1)
   Delay_ms(1)
   irvr10 = Adc_Read(0)
   irvL10 = Adc_Read(1)
   Delay_ms(1)
   irvr=(irvr1+irvr2+irvr3+irvr4+irvr5+irvr6+irvr7+irvr8+irvr9+irvr1
   0)/10
   Delay_ms(100)
   irvL=(irvL1+irvL2+irvL3+irvL4+irvL5+irvL6+irvL7+irvL8+irvL9
   +irvL10)/10
  Delay_ms(100)
  WordToStr(irvr,irvrlcd)
  Lcd_Out(1,5,irvrlcd)
  WordToStr(irvL,irvLlcd)
  Lcd_Out(1,11,irvLlcd)
  'delay_ms(10)
  if portc.0=1 then
  EEprom_write(0,irvr)
  delay_ms(5)
  eeprom_write(1,irvL)
  delay_ms(5)
  eeprom_write(2,irvr)
  delay_ms(5)
  end if
   if (portc.2=1) and (fl.0=0) and (x<100) then '??C??E
   ??C??E C???? C???C?
   y=y+1
   fl.0=1
   end if
   if portc.2=0 then
   fl.0=0
   end if
   if (portc.3=1) and (fl.1=0) and (y<100) then ' ??C??E
  ??C??E C???? C?????
   x=x+1
  fl.1=1
   end if
  if portc.3=0 then
   fl.1=0
   end if
   if (portc.5=1) and (fl.2=0) and(zz<200) then
   zz=zz+1
   end if
   if portc.1=1 then
  x=0
  y=0
  zz=0
  end if
  irvrSt= EEprom_read(0) ',??? C??UC??
  irvrst=irvrst - x
  WordToStr(irvrSt,irvrStlcd)
  Icd_out(2,5,irvrStlcd)
  irvlst= eeprom_read(1)
    irvlSt=irvlSt - y
  WordToStr(irvlst,irvlStlcd)
  Icd_out(2,10,irvlstlcd)
  onoffst=EEprom_read(2)
  onoffst=onoffst + zz
  WordToStr(onoffst,onofflcd)
  Icd_out(2,1,onofflcd)
  if irvr > onoffst then'EOU??
  portb.2=1
  end if
  if irvr < onoffst then 'C??C?
  portb.2=0
  end if
  if irvl < irvlSt then '
  portb.1=1 '
  end if '
  if irvl > irvlSt then '
  portb.1=0 '
  end if '
   delay_ms(50) "
  if irvr < irvrSt then
  portb.0=1 '
  end if
  if irvr > irvrSt then '
  portb.0=0 '
  end if '
  wend
  end.
```

### iii. The Engine circuit control program:-

This program is to control the sign out from the first specified controller specific to the glasses, where different signs are received from the glasses controller.

Where certain sign received is to the right, certain sign received is to the left and certain sign received is to the front the controller is programmed to deliver voltage to the relays responsible for the first controller and opening the engines and chair brakes.

The following program written in Mikro Basic achieves this mechanism:

```
  [program motorContEleChPlus
  dim cour,couon,coul as word
  dim pw1,pw2,onoff,fl ,flr,fll as byte
   sub procedure interrupt
    if (portb.2=1) and (portb.0=0) and (portb.1=0) and
  (couon<5000) then ' on off sigal ?ICI C?EOU??
    couon=couon+1
    end if
    if portb.2=0 then
    couon=0
    end if
   if (portb.0=1) and (portb.2=0)and (portb.2=0) and
  (cour<5000) then 'COC?E C?????
   cour=cour+1
   flr=255
   fll=0
   end if
   if portb.0=0 then
   cour=0
   end if
   if (portb.1=1) and (portb.2=0)and (portb.2=0) and
  (coul<5000) then 'COC?E C???C?
   coul=coul+1
   fll=255
   flr=0
   end if
   if portb.1=0 then
   coul=0
   end if
   TMR0 = 96
   INTCON = $20 ' Set T0IE, claer T0IF
  end sub
  main:
  OPTION_REG = $84 ' Assign prescaler to TMR0
  cour = 0 ' Initialize counter
  TMR0 =96
  INTCON =$A0 ' Enable TMRO interrupt
  ADCON1 = $80 ' Configure analog inputs and
  Vref
  TRISA = $FF ' PORTA is input
  trisc=%00000000
  poftc=%00000000
  trisb=%11111111
  pw1=0
  pw2=0
  onoff=0
  couon=0
  fl=O
  cour=0
  coul=0
  flr=0
  fll=0
  while true
  if portb.7=0 then
  portc=0
  end if
  if portb.7=1 then
   if (couon > 1 )and (portb.0=0) and (portb.1=0) then 'E?I
  ?E?? ?? ???? COC?E C????
   'if portc.7=0 then
  'portc.0=1
  'delay_ms(500)
  'portc.0=0
  ' end if
  if flr=255 then
  portc.7=0
  portc.6=1'0
  Delay_ms(200)
  portc.2=1
  portc.1=0
  delay_ms(100)
  flr=0
  end if
  if fll=255 then
  portc.7=1 "?E? E?? C???? C?????
  portc.6=0'C??C? E?? C???? C???C?
  Delay_ms(200)
  portc.2=0
  portc.1=1
  fl.2=1
  delay__ms(100)
  fll=0
  end if
  portc.7=1
  portc.6=1
  Delay_ms(500)
  portc.2=1
  portc.1=1
  fl.4=1
  end if
    if (portb.2=0) and (fl.4=1) then
  'portc.0=1
  'delay_ms(200)
  'portc.0=0
  portc.1=0
  portc.2=0
  delay_ms(500)
   portc.7=0
   portc.6=0
    fl.4=0
    end if
  if (cour > 1 )and (portb.2=0) and (portb.1=0) then 'E?I ?E??
  ?? ???? COC?E C????
  'portc.0=1
  'delay_ms(300)
  'portc.0=0
  portc.7=1 "?E? E?? C???? C?????
  portc.6=0'C??C? E?? C???? C???C?
  Delay_ms(200)
  portc.2=0
  portc.1=1
  fl.2=1
  end if
    if (portb.0=0) and (fl.2=1) then
    portc=0
    fl.2=0
    end if
   if (coul > 1 )and (portb.2=0) and (portb.0=0) then 'E?I ?E??
  ?? ???? COC?E C????
  'portc.0=1
  'delay_ms(300)
  'portc.0=0
  portc.7=0
  portc.6=1'0
  Delay_ms(200)
  portc.2=1
  portc.1=0
  f1.3=1
  end if
    if (portb.1=0) and (fl.3=1) then
    portc=0
   fl.3=0
    end if
   end if
  wend
  end.
```

Another aspect of the disclosed embodiments was designed to reduce fatigue for some people who find it inconvenient to look at the probe that is located on the outskirts of the glasses for a long time and is achieved through another program to control the glasses through the eyelid where the glasses works connected to Electronic guiding panel in the front of the person by the cursor direction on it and the eye is closed as a signal to the glasses to control the chair according to the cursor direction on the electronic panel.

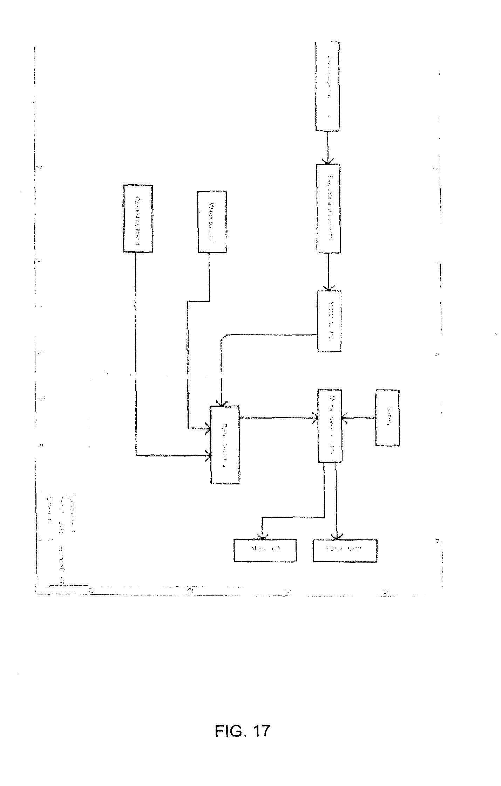

FIG. 17 illustrates a boxing scheme for the embodiments. This figure represents the boxing scheme for the circuits and the stages of the invention are connected with each other through some of the ins and outs by wire and some programming languages for the system as a whole.

It will be appreciated that variations of the above disclosed and other features and functions, or alternatives thereof, may be desirably combined into many other different systems or applications. Also that various presently unforeseen or unanticipated alternatives, modifications, variations or improvements therein may be subsequently made by those skilled in the art which are also intended to be encompassed by the following claims.

## Claims

1. A method for recognizing gestures of any part of the eye as signals comprising:
at least one optical probe wherein a transmitter sends rays in the direction of the eyes and a receiver receives rays reflected from the eyes;
and a microcontroller interprets the said rays received by the receiver to determine the position and movement of pupil and eyelids.

2. The method of claim 1 wherein the said gestures recognized as signals are used to trigger electronic output responses to an electronic machine.

3. The method of claim 1 where the said optical probe is attached to glasses worn by a person.

4. The method of claim 2 wherein the said electronic machine is an electronic wheelchair.

5. The method of claim 4 wherein at least one MOSFET is used to control the speed of movement of said wheelchair.

6. The method of claim 4 wherein probes are used as protection mechanism to stop the said wheelchair's movement in case of detection of a collision possibility.

7. The method of claim 4 wherein an Encoder and a Decoder are used for wireless operation of the wheelchair.

8. An apparatus for recognizing gestures of any part of the eye as signals comprising:
at least one optical probe wherein a transmitter sends rays in the direction of the eyes and a receiver receives rays reflected from the eyes;
and a microcontroller which interprets the said rays received by the receiver to determine the position and movement of pupil and eyelids.

9. The apparatus of claim 8 wherein the said gestures recognized as signals are used to trigger electronic output responses to an electronic machine.

10. The apparatus of claim 8 where the said optical probe is attached to glasses worn by a person.

11. The apparatus of claim 9 wherein the said electronic machine is a wheelchair.

12. The apparatus of claim 11 wherein at least one MOSFET is used to control the speed of movement of said wheelchair.

13. The apparatus of claim 11 wherein probes are used as protection mechanism to stop the said wheelchair's movement in case of detection of a collision possibility.

14. The method of claim 11 wherein an Encoder and a Decoder are used for wireless operation of the wheelchair.

15. The apparatus of claim 9 wherein a display panel is used for simulation or testing purpose of the triggered electronic output responses.
